# EUROPÄISCHE PATENTANMELDUNG

(11) **EP 0 595 165 A2**
(43) Veröffentlichungstag der Anmeldung: **04.05.1994**
(21) Anmeldenummer: 93116863.7
(22) Anmeldetag: 19.10.1993
(51) Int. Cl.: C09D 17/00, D06P 1/44, D06P 1/52

(54) **Farbmittelpräparationen zum Färben von Kunststoffen**

(30) Priorität: 30.10.1992 DE 4236709
(71) Anmelder: BAYER AG, 51368 Leverkusen (DE)
(72) Erfinder: Runde, Hans-Jürgen, Dipl.-Ing., D-51381 (DE); Pape, Georg, Dr., D-51381 Leverkusen (DE); Wieser, Karl-Heinz, Dr., D-51375 Leverkusen (DE); Schuffenhauer, Erhard, D-51373 Leverkusen (DE)

(57) **Zusammenfassung**

Präparation enthaltend
A) ein Pigment und/oder Ruß,
B) ein Anpastungsmittel und
C) eine Ti-organische Verbindung
sowie ihre Verwendung zum Pigmentieren von organischem, makromolekularem Material, insbesondere Polyurethankunststoffen.

## Beschreibung

Die Erfindung betrifft Pigment- und/oder rußhaltige Präparationen, ihre Herstellung sowie Verfahren zum Pigmentieren von organischem makromolekularem Material, insbesondere Kunststoffen auf Polyurethan-Basis.

Polyurethane als Lackbindemittel oder Beschichtungsmaterial, z.B. für Textilien, werden in einer breiten Palette als Ein- oder Zweikomponenten-Systeme, hochelastisch oder hart, lösungsmittelfrei oder lösungsmittelhaltig hergestellt. Sofern diese Materialien pigmentierbar sind, stellt sich das Problem, einen geeigneten Pigmentträger zu finden, in dem die Pigmente hochkonzentriert, flockungsfrei dispergiert werden können und der mit den verschiedenartigen Polyurethanen verträglich ist, um nicht für jedes spezielle System eine spezielle Pigmentpaste bereithalten zu müssen. Bei den in der Lackindustrie gebräuchlichen Zweikomponenten-Systemen steht für die Pigmentierung zumeist nur die relativ niedrigviskose Polyolkomponente zur Verfügung, in der nicht nur Ruß oder organische Pigmente wie Phthalocyanine, sondern auch anorganische Pigmente wie Eisenoxidgelb oder Eisenoxidrot nicht ohne Flockungs- und Thixotropieerscheinungen zu dispergieren sind. Das macht zunächst jede Anreibung problematisch und unwirtschaftlich, wirkt sich aber nach Zusatz der Isocyanat-Komponente noch negativ auf Verlauf, Glanz, Farbtiefe, Deckfähigkeit und Glanzhaltung der ausgehärteten Lackfilme aus.

In den Polyurethan-Beschichtungsmaterialien für Textilien liegen sehr hochmolekulare Körper vor, die untereinander nur begrenzt mischbar sind (Ein- oder Zweikomponenten-Systeme) und schon allein aus Viskositätsgründen keine hohen Pigmentkonzentrationen erlauben.

Neben diesen homogenen Polyurethanen haben zellförmige Polyurethane große Bedeutung erlangt, die hinsichtlich ihrer Elastizität von harten zu extrem weichen Schaumstoffen variieren können. Die Anfärbung dieser Schaumstoffe geschieht in der Hauptsache kurz vor der Verschäumung in einem Mischkopf, in dem Polyole und Polyisocyanate in Gegenwart von Hilfsstoffen mit Farbpasten innig vermischt werden. Als Anpastungsmittel enthalten solche Farbpasten zumeist Polyester- oder Polyether-Polyole, deren Pigmentaufnahmevermögen insbesondere gegenüber Ruß so niedrig ist, daß bei Rußkonzentrationen von 10 bis 18 % bereits hochviskose Farbpasten vorliegen. Bei einer normalen Zudosierung der Farbpasten von 3 bis 5 %, die noch ohne großen Einfluß auf das mechanische Verhalten der Schaumstoffe ist, wird keine tiefe Anfärbung erreicht, sondern z.B. im Falle des Rußes nur eine graue Färbung.

Voraussetzung für die Dosierung ist eine gut pumpbare Farbpaste mit einem möglichst hohen Farbmittelanteil, um den Einfluß auf das mechanische Verhalten der Schaumstoffe durch das Anpastungsmittel klein zu halten.

Auch bei der Herstellung der Pasten spielt die Viskosität eine große Rolle, da hochviskose Pasten nur auf Walzenstühlen oder Knetern herstellbar sind. Die kontinuierliche Herstellung in Perlmühlen ist bei hochviskosen Pasten nicht möglich.

Als Zusätze zur Reduzierung der Viskosität solcher Pasten sind aus der Patentliteratur z.B. Polyvinylpyrrolidon (DE-A 3 115 651), carbodiimidgruppenhaltige Urethane (DE-A 2 402 839), isoharnstoffgruppenhaltige Urethanharze (EP-A 27 907) und ein Copolymer aus einem α-Olefin und einem α,β-ungesättigten Dicarbonsäureester (DE-A 3 803 810) bekannt. Die Nachteile dieser Zusätze sind einerseits, daß sie keine genügend hohe Pigmentkonzentration zulassen oder andererseits, daß sie meist nur bei einem Pigment oder nur bei einer Kombination aus Pigment und Polyester- oder Polyetherpolyol wirken.

Es wurde nun gefunden, daß die aufgezeigten Schwierigkeiten überwunden werden können, wenn man die erfindungsgemäßen Präparationen einsetzt.

Die erfindungsgemäßen Präparationen enthalten die Komponenten
A) ein Pigment und/oder Ruß,
B) ein Anpastungsmittel und
C) eine Ti-organische Verbindung
Die Präparationen enthalten bevorzugt 5 - 40 Gew.-Teile, besonders bevorzugt 10 - 30 Gew.-Teile der Komponente A), 60 - 95 Gew.-Teile, besonders bevorzugt 60 -80 Gew.-Teile der Komponente B) und 0,1 - 10 Gew.-Teile, besonders bevorzugt 0,5 - 5 Gew.-Teile der Komponente C).

Die Pigmente, die in den Pigmentzubereitungen enthalten sind, unterliegen keiner Beschränkung. Sie können organischer oder anorganischer Natur sein. Geeignete organische Pigmente sind z.B. solche der Azo-, Anthrachinon-, Thioindigo-Reihe, ferner andere polycyclische Pigmente, z.B. aus der Phthalocyanin-, Chinacridon-, Dioxazin-, Naphthalintetracarbonsäure-, Perylentetracarbonsäure- oder Isoindolin-Reihe sowie Metallkomplex-Pigmente oder verlackte Farbstoffe wie Ca-, Mg-, Al-Lacke von sulfonsäure- und/oder carbonsäuregruppenhaltigen Farbstoffen, von denen eine große Zahl beispielsweise aus Colour-Index, 2. Auflage, bekannt ist.

Geeignete anorganische Pigmente sind beispielsweise Zinksulfide, Ultramarine, Titandioxide, Eisenoxide, Nickel- oder Chromantimontitandioxide, Kobaltblau, Chromoxide und Chromatpigmente.

Besonders bevorzugte Pigmente der erfindungsgemäßen Pigmentpräparationen sind Kupferphthalocyaninpigmente, z.B. Pigment Blue 15, Pigment Green 7, Arylamid-Pigmente vom Disazo-Typ, z.B. Pigment Yellow 83, Pigment Yellow 17, sowie Carbon Black, Zinksulfide und Ultramarine.

Ganz besonders bevorzugt sind Ruße mit einer BET-Oberfläche von 30-100 m²/g.

Als Anpastungsmittel kommen übliche Pigment- oder Rußanpastungsmittel, z.B. solche vom Ester- oder Ether-Typ, z.B. Polyetherpolyole und Polyesterpolyole, wie sie z.B. als Aufbaukomponenten für Polyurethane bekannt sind, sowie Dicarbonsäureester, insbesondere Adipin- und Phthalsäureester, in Frage.

Besonders bevorzugt sind Polyester aus Phthalsäure oder Adipinsäure und einem Polyalkohol sowie gegebenenfalls einem einwertigen Alkohol mit 1 bis 18 C-Atomen wie sie z.B. aus der DE-A 2 905 975 bekannt sind, z.B. Polytriethylenglykolnonylphthalat und Polypropylenglykoladipat, sowie Polyetherpolyole, hergestellt durch Anlagerung von Ethylenoxid und/oder Propylenoxid an ein Polyol (s. z.B. DE-A 3 115 651).

Die verwendeten Ti-organischen Verbindungen sind vorzugsweise vierfach substituiert, wobei ein Substituent beispielsweise ein Vertreter der Alkoxy-Reihe ist und die anderen Substituenten für Aminoalkoxy, Aminocarbonsäureester oder Aminosulfonsäureester mit vorzugsweise terminalen NH₂-Gruppen stehen. Als Ti-organische Verbindung wird für die Präparation vorzugsweise mindestens eine Verbindung der folgenden Formeln verwendet.

R¹-O-Ti⁅O-(CH₂CH₂-NH)ₘ-H]₃ (I)

R²-O-Ti⁅OCO-(CH₂)ₙ-NH₂]₃ (II)

R³-O-Ti⁅O-SO₂-(CH₂)ₙ-NH₂]₃ (III)

worin
m = 1 - 4
n = 1 - 6
R¹, R² und R³ unabhängig voneinander für C₁-C₆-Alkyl, vorzugsweise für Methyl, Ethyl, n-Propyl, iso-Propyl, n-Butyl, sek.-Butyl, n-Pentyl oder n-Hexyl stehen kann.

Das als Zahlenmittel bestimmte mittlere Molekulargewicht dieser Verbindungen beträgt im allgemeinen 150 bis 1000, bevorzugt 350 bis 500.

Besonders bevorzugte Ausführungsformen sind Verbindungen der Formeln (I) - (III), worin
R¹, R² und R³ für iso-Propyl oder Ethyl steht.

Ganz besonders bevorzugt sind Verbindungen der Formel (I), worin
R¹ für iso-Propyl oder Ethyl steht, m = 2 oder 3 bedeutet und n = 2 oder 4.

Eine dieser besonders bevorzugten Verbindungen der Formel I wird durch die folgende Formel wiedergegeben: 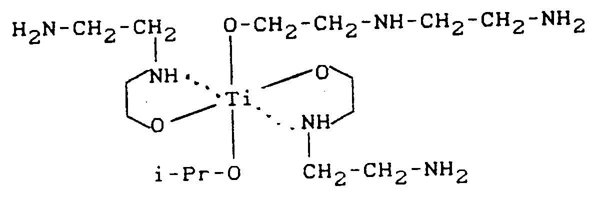
Allgemeine und spezielle Herstellungsverfahren für die Verbindungen der obigen Formeln I-III sind aus EP-A 164 227, Formel I; US-4 098 758, DE-A-26 21 463, DE-A 2 515 863, Formel II; DE-A-26 21 463, Formel III bekannt.

Neben den Komponenten A) bis C) können die erfindungsgemäßen Präparationen weitere, für Pigment- oder Rußpräparationen übliche Bestandteile enthalten. Als solche seien beispielhaft genannt: Verdünnungsmittel, wie Tributylphosphat, Glykolether oder Glycerinether, Stabilisatoren oder Konservierungsmittel.

Die erfindungsgemäßen Pigmentpräparationen können in üblichen Naßzerkleinerungsaggregaten hergestellt werden, wie Kneter, Attritoren, Walzenstühlen, Dissolver, Rotor-Stator-Mühlen, Kugelmühlen und besonders bevorzugt in schnell laufenden Rührwerksmühlen mit Umlaufgeschwindigkeiten von 5 bis 60 m/sec., bevorzugt 10 bis 20 m/sec., die Mahlkörper in der Größe von etwa 0,1 bis 10 mm Durchmesser, bevorzugt 0,5 bis 2 mm, aus Stahl, Glas, Keramik, Sand oder Kunststoff enthalten.

Durch den Einsatz der erfindungsgemäßen Verbindungen werden höhere Pigment- und Farbrußkonzentrationen bei gleichzeitig geringer Viskosität möglich. Wird eine analoge Präparation ohne eine Ti-organische Verbindung hergestellt, so ist ihre Viskosität so hoch, daß eine Herstellung in der Perlmühle nicht möglich ist.

Die Erfindung betrifft weiterhin ein Verfahren zum Pigmentieren von organischem, makromolekularem Material, insbesondere von Polyurethan-Schaum, das dadurch gekennzeichnet ist, daß man die beschriebenen Präparationen für die Einfärbung von organischem, makromolekularem Material, insbesondere von Polyurethan-Schaumstoffen, verwendet.

Dabei wird die erfindungsgemäße Präparation beispielsweise vor oder während der Polyurethanbildung entweder der Polyol- oder der Polyisocyanatkomponente oder dem Reaktionsgemisch zugesetzt.

Die weitere Reaktion wird in üblicher Weise, d.h. wie für nichtpigmentierte Polyurethankunststoffe durchgeführt. Angaben dazu sind beispielsweise G. Oertel, Kunststoff-Handbuch, Bd. 7, Polyurethane, Hanser, München, Wien 1983, engl. Ausgabe 1985 zu entnehmen.

Die Anfärbung der Polyurethan-Schaumstoffe geschieht vorzugsweise kurz vor der Verschäumung in einem Mischkopf, in dem die Polyole und Polyisocyanate gegebenenfalls in Gegenwart von Hilfsstoffen mit den Präparationen innig vermischt werden.

Die Prozentangaben der nachfolgenden Beispiele bedeuten Gewichtsprozente, Teile bedeuten Gewichtsteile.

### Beispiel 1

Eine schwarze Pigmentpräparation aus 20 g Farbruß mit einer BET-Oberfläche von 42 m²/g, 10 g Tri-n-butylphosphat, 3 g der Ti-Verbindung der Formel

(CH₃)₂CH-O-Ti-[-O-CH₂CH₂-NH-CH₂CH₂-NH₂]₃

und 67 g eines Polyesters, der ein Umsetzungsprodukt aus Phthalsäure, Triethylenglykol und Isononylalkohol ist und eine OH-Zahl von 40 bis 60 besitzt, wird wie folgt hergestellt:
Über Dosieraggregate werden Farbruß, Tri-n-butylphosphat, die Ti-Verbindung und der Polyester in eine schnellaufende, mit Stahlperlen beschickte, kontinuierlich arbeitende Rührwerksmühle eingetragen. Man erhält eine fließfähige Paste mit einer Viskosität von 6000 mPa.s bei 23⁰C (D = 7,3 s⁻¹), die für die Einfärbung von Polyurethan-Schaum geeignet ist. Die Molmasse des verwendeten Polyesters liegt im Bereich von 400 bis 600 g/mol; seine Viskosität bei etwa 200 bis 250 mPa.s bei 23⁰C (Messung nach DIN 53 019).

### Beispiel 2

In 75 g einer 4 %igen Lösung von einer Ti-organischen Verbindung der Formel

(CH₃)₂CH-O-Ti-[O-SO₂-(CH₂)₂-NH₂]₃

in einem Polyester mit OH-Zahl 65, der ein Umsetzungsprodukt aus Adipinsäure und Propandiol-1,2 ist, werden 25 g eines Farbrußes mit einer BET-Oberfläche von 51 m²/g auf einem Schüttelgerät mit Hilfe von Glaskugeln von 2 mm Durchmesser innerhalb von 30 Minuten dispergiert. Man erhält eine sehr gute fließfähige Rußpaste mit einer Viskosität von etwa 5000 mPa.s (23⁰C, D = 7,3 s⁻¹), die sich durch hohe Flockungsstabilität auszeichnet. Sie ist besonders für die Anfärbung von Polyurethanschäumen auf Esterbasis geeignet.

### Beispiel 3

3 g der Ti-organischen Verbindung der Formel

(CH₃)₂CH-O-Ti-[-O-CH₂CH₂-NH-CH₂CH₂-NH₂]₃

werden in einem Gemisch gelöst, das 49 g eines Polyesters, hergestellt aus Adipinsäure und Propandiol-1,2 und 16 g eines Polyesters, hergestellt aus Phthalsäure, Triethylenglykol und Isononylalkohol, sowie 10 g Tributylphosphat enthält. Die Lösung wird mit 25 g eines Farbruß mit einer BET-Oberfläche von 35 m²/g angeschlagen. Die erhaltene Paste wird in einer kontinuierlich arbeitenden, mit 2 mm Glasperlen beschickten Rührwerkskugelmühle zu einer gut fließfähigen Farbpaste formiert, die für die Einfärbung von Polyurethan-Schaum geeignet ist. Die Viskosität dieser Präparation liegt bei etwa 4500 mPa.s (23⁰C, D = 7,3 s⁻¹).

### Beispiel 4

1 g der Ti-organischen Verbindung der Formel

(CH₃)₂CH-O-Ti-[-O-CH₂CH₂-NH-CH₂CH₂-NH₂]₃

werden mit 81 g eines Polyesters, hergestellt aus Adipinsäure, und Propylenglykol, verrührt. Diese Mischung wird mit 18 g Farbruß mit einer BET-Oberfläche von 45 m²/g versetzt und in einer kontinuierlich arbeitenden Rührwerksmühle mit 2 mm Stahlperlen innerhalb von 30 Minuten formiert. Man erhält eine sehr gut fließfähige Rußpaste mit einer Viskosität von etwa 6000 mPa.s (23⁰C, D = 7,3 s⁻¹).

### Beispiel 5

2 g der Ti-organischen Verbindung der Formel

(CH₃)₂CH-O-Ti-[-O-CH₂CH₂-NH-CH₂CH₂-NH₂]₃

werden mit 80 g eines Polyesters, hergestellt aus Phthalsäure, Triethylenglykol und Isononylalkohol, verrührt. Diese Mischung wird mit 18 g der Kupferphthalocyanins Pigment Blue 15:1 der α-Modifikation versetzt und in einer kontinuierlich arbeitenden Rührwerksmühle mit 2 mm Stahlperlen formiert. Man erhält eine sehr gut fließfähige Pigmentpaste mit einer Viskosität von etwa 9000 mPa.s (23⁰C, D = 7,3 s⁻¹).

### Beispiel 6

Die Rußpaste aus Beispiel 4 wird zum Pigmentieren von Polyurethan-Schaumstoffen verwendet, indem man eine Mischung aus 200 g eines Polyesters aus Adipinsäure, Diethylenglykol und Trimethylolpropan mit der OH-Zahl 50 und 73,2 g Toluylendiisocyanat mit 10 g der Rußpaste aus Beispiel 4 versetzt und das Gemisch durch den üblichen Zusatz von Wasser und Hilfsmitteln, zur Schaumbildung bringt. Die so eingefärbten Polyurethan-Schaumstoffe besitzen eine hohe Farbtiefe.

### Beispiel 7

30 g eines Farbrußes mit einer BET-Oberfläche von 58 m²/g werden mit 4 g der Ti-organischen Verbindung der Formel

(CH₃)₂CH-O-Ti-[OCO-(CH₂)₂-NH₂]₃

und 66 g eines Polyestergemisches aus 40 % eines Polyestes basierend auf Adipinsäure und Propylenglykol sowie 60 % eines Polyesters basierend auf Phthalsäure, Triethylenglykol und Isononylalkohol homogenisiert und in einer kontinuierlich arbeitenden Rührwerksmühle gemahlen. Man erhält eine gut fließende Farbpaste mit einer Viskosität von etwa 5000 mPa.s. (23⁰C, D = 7,3 s⁻¹).

### Beispiel 8

15 g eines Bisazo-Kondensationspigmentes (Pigment Yellow 83), 4 g der Ti-organischen Verbindung der Formel

(CH₃)₂CH-O-Ti-[O-SO₂-(CH₂)₂-NH₂]₃

15 % Tri-n-butylphosphat und 66 g eines Polyesters aus Adipinsäure und Propylenglykol werden homogenisiert und in einer kontinuierlich arbeitenden Rührwerksmühle gemahlen. Man erhält eine gut fließende Farbpaste mit einer Viskosität von etwa 11000 mPa.s (23⁰C, D = 7,3 s⁻¹), die für die Einfärbung von Polyurethan-Schaum geeignet ist.

## Patentansprüche

1. Präparation, enthaltend die Komponenten
A) ein Pigment und/oder Ruß
B) ein Anpastungsmittel und
C) eine Ti-organische Verbindung.

2. Präparationen gemäß Anspruch 1, enthaltend
5 bis 40 Gew.-Teile eines anorganischen oder organischen Pigments oder Ruß,
60 bis 95 Gew.-Teile eines Anpastungsmittels und
0,1 bis 10 Gew.-Teile einer Ti-organischen Verbindung,

3. Präparationen gemäß einem der Ansprüche 1 oder 2, enthaltend
10 bis 30 Gew.-Teile eines anorganischen oder organischen Pigments oder Ruß,
60 bis 90 Gew.-Teile eines Anpastungsmittels und
0,5 bis 5 Gew.-Teile einer Ti-organischen Verbindung,

4. Präparationen gemäß mindestens einem der Ansprüche 1 bis 3, enthaltend Ruß oder ein organisches Pigment der Azo-, Anthrachinon-, Thioindigo-, Phthalocyanin-, Chinacridon-, Dioxazin-, Naphthalintetracarbonsäure- oder Isoindolin-Reihe, ein Metallkomplex-Pigment oder einen verlackten Farbstoff.

5. Präparationen gemäß einem der Ansprüche 1 bis 3, enthaltend ein anorganisches Pigment aus der Reihe Zinksulfide, Ultramarin, Titandioxide, Eisenoxide, Nickel- oder Chromantimonoxide, Kobaltblau, Chromoxide, Chromatpigmente.

6. Präparationen gemäß einem der Ansprüche 1 bis 4 oder 1 bis 3 und 5 enthaltend als Anpastungsmittel wenigstens ein Polyetherpolyol und/oder Polyesterpolyol.

7. Präparationen nach mindestens einem der vorhergehenden Ansprüche, enthaltend mindestens eine Tiorganische Verbindung der folgenden Formel
R¹-O-Ti⁅O-(CH₂CH₂-NH)ₘ-H]₃ (I)
R²-O-Ti⁅OCO-(CH₂)ₙ-NH₂]₃ (II)
R³-O-Ti⁅O-SO₂-(CH₂)ₙ-NH₂]₃ (III)
worin
R¹, R² und R³ unabhängig voneinander für C₁-C₆-Alkyl, insbesondere für Methyl, Ethyl, n-Propyl, iso-Propyl, n-Butyl, sek.-Butyl oder Pentyl steht,
m eine Zahl von 1 bis 4 bedeutet und
n für eine Zahl von 1 bis 6 steht.

8. Präparationen gemäß Anspruch 7, enthaltend mindestens eine Ti-organische Verbindung der Formeln (I) bis (III)
worin
R¹, R² und R³ für Isopropyl steht.

9. Präparationen gemäß Anspruch 7, enthaltend eine Tiorganische Verbindung der Formel (I)
worin
R¹ für Isopropyl steht und
m = 2 bedeutet.

10. Verfahren zum Pigmentieren von Polyurethanen, dadurch gekennzeichnet, daß man eine Präparation enthaltend die Komponenten A), B) und C) gemäß einem oder mehrerer der Ansprüche 1 bis 9 verwendet.
